(19) Europäisches Patentamt
European Patent Office
Office européen des brevets

(11) **EP 4 485 020 A1**

(12) **DEMANDE DE BREVET EUROPEEN**

(43) Date de publication:
**01.01.2025 Bulletin 2025/01**

(21) Numéro de dépôt: **24183594.1**

(22) Date de dépôt: **21.06.2024**

(51) Classification Internationale des Brevets (IPC):
**G02B 6/02** *(2006.01)* **G02B 6/293** *(2006.01)*
**G02B 6/32** *(2006.01)* **G02B 6/26** *(2006.01)*
**G02B 6/255** *(2006.01)* **G02B 6/028** *(2006.01)*

(52) Classification Coopérative des Brevets (CPC):
**G02B 6/02042; G02B 6/262; G02B 6/32;**
G02B 6/028; G02B 6/255

(84) Etats contractants désignés:
**AL AT BE BG CH CY CZ DE DK EE ES FI FR GB
GR HR HU IE IS IT LI LT LU LV MC ME MK MT NL
NO PL PT RO RS SE SI SK SM TR**
Etats d'extension désignés:
**BA**
Etats de validation désignés:
**GE KH MA MD TN**

(30) Priorité: **30.06.2023 FR 2306988**

(71) Demandeur: **Orange**
**92130 Issy-les-Moulineaux (FR)**

(72) Inventeur: **CHANCLOU, Philippe**
**92326 Châtillon (FR)**

(74) Mandataire: **Vidon Brevets & Stratégie**
**16B, rue de Jouanet**
**35700 Rennes (FR)**

(54) **SYSTÈME DE COUPLAGE D'UNE FIBRE OPTIQUE MULTI-COEUR AVEC AU MOINS UNE FIBRE OPTIQUE MONO-COEUR, ET PROCÉDÉ DE COUPLAGE CORRESPONDANT**

(57) L'invention concerne un système de couplage entre une fibre optique multi-coeur (MCF) et un ensemble d'au moins une fibre optique mono-coeur (SCF), chaque fibre mono-coeur dudit ensemble étant couplée à un coeur distinct de la fibre multi-coeur, ledit système de couplage comprenant :
- une lentille à gradient d'indice (GRIN-L), positionnée entre ladite fibre multi-coeur et ladite au moins une fibre mono-coeur ;
- une première section de fibre à gradient d'indice couplée en extrémité de la fibre multi-coeur pour former une première extrémité micro-lentillée (GRIN-MCF) ;
- pour chaque fibre mono-coeur, une deuxième section de fibre à gradient d'indice couplée en extrémité de ladite fibre mono-coeur pour former une deuxième extrémité micro-lentillée (GRIN-SCF) ; lesdites première et deuxième extrémités micro-lentillées étant couplées de part et d'autre de ladite lentille avec un décalage radial de l'une par rapport à l'autre défini en fonction d'un paramètre de coeur de la fibre multi-coeur.

[Fig.1]

EP 4 485 020 A1

## Description

## Domaine technique de l'invention

L'invention concerne le domaine de la transmission optique de données, et plus particulièrement celui de l'interconnexion entre une fibre optique multi-coeur et au moins une fibre optique mono-coeur.

## État de la technique antérieure

Les réseaux de télécommunications nécessitent de grandes capacités de transmission. Ainsi, les fibres optiques multi-coeurs peuvent être préférées aux fibres optiques mono-coeurs, puisqu'elles permettent une transmission simultanée de plusieurs signaux optiques de manière plus compacte. Des solutions d'interconnexion entre des fibres multi-caeurs et des fibres mono-coeurs sont donc utilisées pour transférer les signaux optiques de l'une vers l'autre et inversement.

Ainsi, de nombreuses méthodes d'interconnexion existent. Par exemple, l'article « Compact Multi-core Fiber Fan-in/out Using GRIN Lens and Microlens Array », Arao H. et al., 2014, OECC /ACOFT, ci-après référencé « Arao », propose une méthode d'interconnexion entre une fibre optique multi-coeur et un réseau de fibres optiques mono-coeurs. Ainsi, dans l'article *Arao,* un réseau de micro-lentilles discrètes est utilisé à la suite d'une lentille à gradient d'indice et d'un espaceur en verre, afin de réorienter les faisceaux optiques issus de la fibre multi-coeur, vers le réseau de fibres optique mono-coeurs. Cependant, l'utilisation d'un espaceur en verre afin d'augmenter l'espacement des faisceaux, est une solution très peu compacte. De plus, l'utilisation de micro-lentilles implique des problèmes d'alignement, de manque de compacité et donc des difficultés de mise en oeuvre du système.

Par conséquent, il est nécessaire de proposer une solution compacte et simple à mettre en oeuvre, permettant notamment de faciliter l'alignement des différents éléments du système.

## Résumé de l'invention

La présente invention répond à ce besoin en proposant un système de couplage entre une fibre optique multi-coeur et un ensemble d'au moins une fibre optique mono-coeur, chaque fibre mono-coeur dudit ensemble étant couplée à un coeur distinct de la fibre multi-coeur, ledit système de couplage comprenant :

- une lentille à gradient d'indice, positionnée entre ladite fibre multi-coeur et ladite au moins une fibre mono-coeur ;
- une première section de fibre à gradient d'indice couplée en extrémité de la fibre multi-coeur pour former une première extrémité micro-lentillée ;
- pour chaque fibre mono-coeur dudit ensemble, une deuxième section de fibre à gradient d'indice couplée en extrémité de ladite fibre mono-coeur pour former une deuxième extrémité micro-lentillée ;

lesdites première et deuxième extrémités micro-lentillées étant couplées de part et d'autre de ladite lentille avec un décalage radial de l'une par rapport à l'autre défini en fonction d'un paramètre de coeur de la fibre multi-coeur.

Ainsi, un tel système de couplage permet de faciliter l'alignement des différents éléments. En particulier, l'utilisation de sections de fibres à gradient d'indice ayant un diamètre similaire au diamètre des fibres multi/mono-coeur permet une fixation définitive par soudage des fibres à gradient d'indice aux extrémités des fibres multi/mono-coeur. L'alignement des éléments d'un tel système est donc plus simple qu'avec un réseau de micro-lentilles tel que décrit dans l'art antérieur.

De plus, un tel système de couplage est compact puisqu'il ne nécessite pas l'utilisation d'un espaceur en verre, ni d'un réseau de micro-lentilles. En effet, les sections de fibre à gradient d'indice permettent de gagner en compacité en jouant à la fois le rôle de lentille/collimateur, permettant un contrôle précis de l'angle et du diamètre de chacun des faisceaux afin de les guider correctement d'une fibre optique à une autre.

Selon une caractéristique particulière de l'invention, le décalage radial de chaque fibre mono-coeur est défini par une distance $h$, la distance $h$ étant définie comme suit :

$$h = e \times \frac{n_1 \times g_1}{n_2 \times g_2}$$

avec les paramètres optiques suivants :

$e$ ledit paramètre de coeur, défini comme étant la distance radiale entre l'axe central de la fibre multi-coeur et l'axe du coeur de la fibre multi-coeur auquel ladite fibre mono-coeur est couplée ;
$n_1$ l'indice de réfraction au centre de ladite première section de fibre à gradient d'indice ;
$g_1$ le coefficient quadratique de ladite première section de fibre à gradient d'indice ;
$n_2$ l'indice de réfraction au centre de ladite lentille à gradient d'indice ;
$g_2$ le coefficient quadratique de ladite lentille à gradient d'indice.

Ainsi, la répartition des fibres mono-coeurs, et donc la distance entre celles-ci est optimisée afin d'obtenir un système de couplage compact. De plus, la distance h doit être supérieure à une valeur seuil choisie en fonction du diamètre des fibres mono-coeurs.

Selon une caractéristique particulière de l'invention, la longueur $l_1$ de la première section de fibre à gradient d'indice de ladite fibre multi-coeur est inversement proportionnelle à son coefficient quadratique $g_1$ ; la longueur $l_2$ de la lentille à gradient d'indice est inversement proportionnelle à son coefficient quadratique $g_2$ ; et la longueur $l_3$ de la section de fibre à gradient d'indice de ladite au moins une fibre mono-coeur, est inversement proportionnelle à son coefficient quadratique $g_3$.

Ainsi, la longueur des sections de fibre à gradient d'indice est adaptée afin de correctement transmettre les faisceaux optiques d'une fibre optique à une autre. Ces sections de fibre à gradient d'indice ont un rôle similaire à celui d'une lentille/collimateur, et permettent d'orienter et de contrôler les faisceaux pour correctement les guider d'une fibre optique à une autre.

Selon un mode de réalisation de l'invention, les coeurs de la fibre optique multi-coeur et l'ensemble d'au moins une fibre optique mono-coeur sont de type monomode.

Ainsi, le système de couplage peut être utilisé dans le cadre de la transmission de signaux sur de longues distances. En effet, les fibres optiques monomodes permettent de limiter le bruit et les pertes, et sont donc préférentiellement utilisées sur de longues distances.

Selon un autre mode de réalisation, les coeurs de la fibre optique multi-coeur et l'ensemble d'au moins une fibre optique mono-coeur sont de type multimode, et transmettent des signaux multiplexés spatialement.

Ainsi, le système de couplage peut être utilisé dans le cadre de la transmission simultanée de plusieurs signaux optiques, souvent sur des distances plus courtes que pour des fibres monomodes. En effet, les fibres optiques multimodes transmettent des signaux multiplexés spatialement composés d'une pluralité de signaux, réfléchis selon différents angles pour former une pluralité de modes (multiplexage modal). Le débit de données transmis est donc augmenté.

Selon encore un autre mode de réalisation, les coeurs de la fibre optique multi-coeur et l'ensemble d'au moins une fibre optique mono-coeur supportent des transmissions de type WDM (*Wavelength Division Multiplexing :* multiplexage en longueur d'onde), et transmettent donc des signaux multiplexés en longueur d'onde.

Ainsi, le système de couplage peut être utilisé dans le cadre de la transmission simultanée de plusieurs signaux optiques, souvent sur des distances plus courtes que pour des fibres monomodes. En effet, à l'instar des fibres de type multimode, les transmissions WDM permettent d'augmenter le débit de transmission des données sur une fibre optique, en comparaison avec une fibre optique monomode ne comprenant qu'un seul signal, puisque les signaux multiplexés en longueur d'onde sont composés d'une pluralité de signaux ayant chacun une longueur d'onde distincte.

Alternativement, le système de couplage comprend au moins deux types différents de fibres mono-coeurs et de coeurs de fibre multi-coeur parmi le type monomode, le type multimode et le type supportant une transmission WDM, c'est-à-dire à un couplage compatible pour l'ensemble des longueurs d'onde de 1260 nm à 1675 nm.

Ainsi, le système de couplage peut mettre en oeuvre des fibres mono-coeurs et des coeurs de fibre multi-coeur de différents types. Par exemple, une fibre multi-coeur peut comporter un coeur de type monomode et un coeur de type multimode, chacun de ces coeurs étant respectivement associés à une fibre monomode et une fibre multimode au sein du système de couplage.

Selon un mode de réalisation particulier, lesdites première et deuxième extrémités micro-lentillées sont directement couplées en entrée et en sortie de ladite lentille à gradient d'indice.

Ainsi, le système de couplage est simple et compact, avec une mise en oeuvre facilitée, en particulier un tel système permet de faciliter l'alignement des différents éléments le composant.

Selon un autre mode de réalisation particulier, au moins une desdites première et deuxième extrémités micro-lentillées est couplée en entrée et/ou en sortie de ladite lentille à gradient d'indice via un composant optique appartenant au groupe comprenant :

- une lame optique ;
- un filtre optique ;
- un composant anti-reflet ;
- un isolateur optique.

Ainsi, le système peut présenter des éléments additionnels, permettant d'obtenir un système plus élaboré avec des fonctions optiques supplémentaires, le système restant compact et simple à mettre en oeuvre.

Selon une variante de l'invention, l'extrémité de la fibre multi-coeur et la première extrémité micro-lentillée correspondante sont comprises dans une férule indépendante ; chaque extrémité de fibre mono-coeur dudit ensemble et la deuxième extrémité micro-lentillée correspondante sont comprises dans une férule indépendante ; et la lentille à gradient d'indice est indépendante.

Selon une autre variante de l'invention, l'extrémité de la fibre multi-coeur, la première extrémité micro-lentillée correspondante et la lentille à gradient d'indice sont comprises dans une même férule, d'une part ; et chaque extrémité de fibre mono-coeur dudit ensemble et la deuxième extrémité micro-lentillée correspondante sont comprises dans une férule indépendante, d'autre part.

Selon encore une autre variante de l'invention, l'extrémité de la fibre multi-coeur et la première extrémité micro-lentillée correspondante sont comprises dans une première férule indépendante d'une part ; et l'ensemble d'au moins une extrémité de fibre mono-coeur, chaque deuxième extrémité micro-lentillée correspondante, et la lentille à gradient d'indice sont comprises dans une deuxième férule, d'autre part.

Ainsi, différents modes de couplage peuvent être utilisés pour la mise en oeuvre du système de couplage. Différents blocs d'éléments peuvent ainsi être interconnectés via des férules indépendantes, ces férules formant des blocs d'éléments séparés (blocs indépendants) et permettant un assemblage mécanique amovible entre ces différents blocs. Le terme « indépendant » précise le caractère séparé des différents blocs d'éléments, ainsi que le caractère amovible de la liaison éventuelle entre ces blocs.

L'invention concerne aussi un procédé de couplage d'une fibre optique multi-coeur et d'un ensemble d'au moins une fibre optique mono-coeur, **caractérisé en ce qu**'il comprend :

-    soudage d'une première section de fibre à gradient d'indice en extrémité de ladite fibre multi-coeur pour former une première extrémité micro-lentillée ;
-    pour chaque fibre mono-coeur dudit ensemble, soudage d'une deuxième section de fibre à gradient d'indice en extrémité de ladite fibre mono-coeur pour former une deuxième extrémité micro-lentillée ;
-    assemblage mécanique de ladite première extrémité micro-lentillée de ladite fibre multi-coeur avec une première interface d'une lentille à gradient d'indice ;
-    assemblage mécanique de ladite deuxième extrémité micro-lentillée de ladite fibre mono-coeur avec une deuxième interface de ladite lentille à gradient d'indice, avec un décalage radial par rapport à la première extrémité micro-lentillée, défini en fonction d'un paramètre de coeur de la fibre multi-coeur.

Ainsi, un tel procédé de couplage, permet un assemblage simple du système où l'alignement des différents éléments est facilité. En particulier, l'utilisation de sections de fibres à gradient d'indice ayant un diamètre similaire au diamètre des fibres multi/mono-coeur permet une fixation définitive par soudage. Le système ainsi obtenu est compact et simple à mettre en oeuvre.

**Présentation des figures**

D'autres buts, caractéristiques et avantages de la technique apparaîtront à la lecture de la description suivante donnée à titre uniquement illustratif et non limitatif, et qui se réfère aux figures annexées, dans lesquelles :

   **[Fig.1]** représente un système de couplage selon un exemple de réalisation de l'invention.
   **[Fig.2]** représente un système de couplage selon un autre exemple de réalisation de l'invention.
   **[Fig.3]** représente une section transversale et une section longitudinale d'une fibre optique multi-coeur selon un exemple de réalisation.
   **[Fig.4]** représente une section transversale et une section longitudinale d'une fibre optique mono-coeur selon un exemple de réalisation.
   **[Fig.5]** représente le couplage d'une fibre optique multi-coeur avec une section de fibre à gradient d'indice, selon un exemple de réalisation.
   **[Fig.6]** représente le couplage d'une fibre optique mono-coeur avec une section de fibre à gradient d'indice, selon un exemple de réalisation.
   **[Fig.7]** représente le couplage d'une fibre optique multi-coeur et d'une section de fibre à gradient d'indice avec une lentille à gradient d'indice, selon un exemple de réalisation.
   **[Fig.8]** est un diagramme représentant les étapes du procédé de couplage selon un mode de réalisation de l'invention.
   **[Fig.9]** représente une section transversale et une section longitudinale d'une fibre optique multi-coeur selon un premier exemple particulier de réalisation, dans lequel la fibre optique multi-coeur comprend 4 coeurs.
   **[Fig.10]** représente le couplage d'une fibre optique multi-coeur avec une section de fibre à gradient d'indice, selon le premier exemple particulier de réalisation.
   **[Fig.11]** représente les profils d'indice de réfraction des différents éléments du système de couplage en fonction de la distance par rapport au centre de chaque élément, selon le premier exemple particulier de réalisation.
   **[Fig.12]** représente un système de couplage, selon le premier exemple particulier de réalisation.
   **[Fig.13]** représente une section transversale et une section longitudinale d'une fibre optique multi-coeur selon un deuxième exemple particulier de réalisation, dans lequel la fibre optique multi-coeur comprend cinq coeurs, dont un coeur central.
   **[Fig.14]** représente le couplage d'une fibre optique multi-coeur avec une section de fibre à gradient d'indice, selon le deuxième exemple particulier de réalisation.
   **[Fig.15]** représente un système de couplage, selon le deuxième exemple particulier de réalisation.
   **[Fig.16]** représente un système de couplage comprenant des fonctions optiques additionnelles, selon un exemple de réalisation.
   **[Fig.17]** représente un système de couplage comprenant différents blocs interconnectés, selon un premier exemple de réalisation.
   **[Fig.18]** représente un système de couplage comprenant différents blocs interconnectés, selon un deuxième exemple de réalisation.
   **[Fig.19]** représente un système de couplage comprenant différents blocs interconnectés, selon un troisième exemple de réalisation.

**Description détaillée de l'invention**

**1. Principe général**

La présente invention concerne une technique de couplage compacte et simple à mettre en oeuvre, entre une fibre optique multi-coeur et au moins une fibre optique mono-coeur.

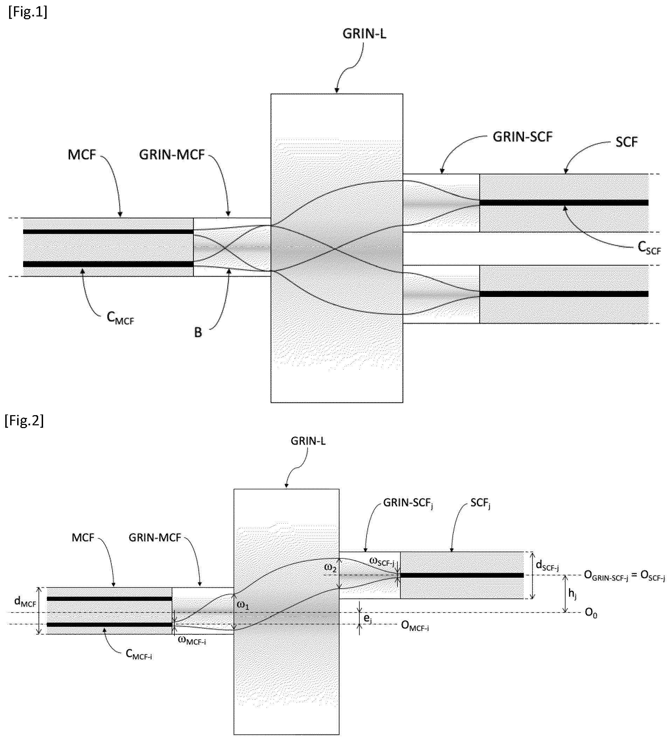

Plus particulièrement, comme illustré par la **[Fig.1]**, la technique de couplage selon l'invention met en oeuvre des fibres multi-coeur (MCF) et mono-coeurs (SCF), chacune de ces fibres optiques présentant une section de fibre à gradient d'indice à son extrémité, formant une extrémité micro-lentillée (GRIN-MCF, GRIN-SCF). De plus, une lentille à gradient d'indice (GRIN-L) est intercalée entre l'extrémité micro-lentillée de la fibre multi-coeur d'une part, et les extrémités micro-lentillées des fibres mono-coeur d'autre part.

Les fibres multi-coeur et mono-coeurs mises en oeuvre selon la technique de l'invention peuvent être de type multimode et/ou monomode et/ou apte à supporter une transmission du type WDM. Dans le cas de fibres monomodes, la propagation des faisceaux optiques au sein des fibres multi-coeur et mono-coeurs peut s'effectuer selon un mode axial (angle d'incidence nul en entrée du coeur de la fibre).

Selon un premier mode de réalisation, le système de couplage peut être mis en oeuvre pour transmettre des faisceaux optiques provenant d'au moins une fibre optique mono-coeur vers les coeurs d'une fibre optique multi-caeur.

Selon un deuxième mode de réalisation, le système de couplage peut être mis en oeuvre pour transmettre des faisceaux optiques provenant des coeurs d'une fibre optique multi-coeur vers au moins une fibre optique mono-coeur. Ce deuxième mode de réalisation est utilisé comme support de description par la suite, étant entendu que la technique selon l'invention ne s'y limite pas.

Ainsi, le système de couplage selon l'invention met en oeuvre une fibre optique multi-coeur comprenant $n$ coeurs, $n$ étant un entier naturel supérieur ou égal à 2, d'une part ; et $m$ fibres optiques mono-coeurs, $m$ étant un entier naturel supérieur ou égal à 1, et inférieur ou égal à $n$, d'autre part. Ainsi, en relation avec la **[Fig.2]**, le faisceau optique en entrée de la fibre optique mono-coeur $j$ ($SCF_j$) est issu du coeur $i$ ($C_{MCF-i}$) de ladite fibre optique multi-coeur, avec $i = j$ et $i \in \{1, ..., n\}$ et $j \in \{1, ..., m\}$.

Selon un mode particulièrement avantageux, à chaque coeur de la fibre multi-coeur correspond une fibre monocoeur, soit $n = m$.

### 1.1. Fibre optique multi-coeur (MCF)

D'une part, le système de couplage selon l'invention met donc en oeuvre une fibre optique multi-coeur. Cette fibre optique multi-coeur comprend au moins deux coeurs. Comme précédemment énoncé, les coeurs de la fibre multi-coeur peuvent être monomodes et/ou multimodes et/ou apte à supporter une transmission du type WDM.

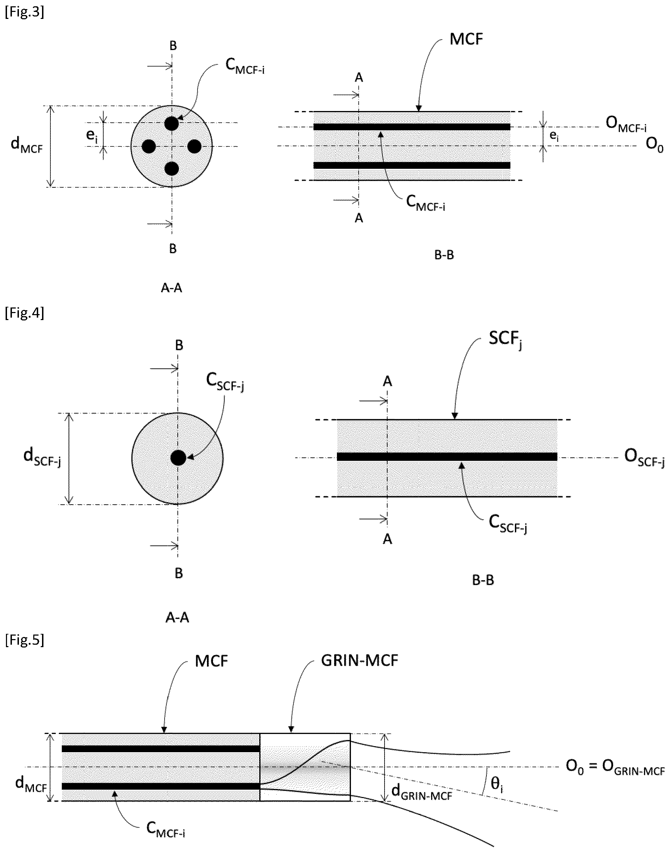

Comme illustré par la **[Fig.2]** et la **[Fig.3]**, la fibre multi-coeur (MCF) a un diamètre $d_{MCF}$. Ce diamètre $d_{MCF}$ est typiquement compris entre 80 et 225 $\mu$m, par exemple 125 $\mu$m. Le diamètre du faisceau optique au sein du coeur $C_{MCF-i}$ de la fibre multi-coeur est $\omega_{MCF-i}$. Enfin, une distance $e_i$ peut être définie entre le centre de la fibre multi-coeur (correspondant à un axe $O_0$), et le centre du coeur $C_{MCF-i}$ de la fibre multi-coeur (correspondant à un axe $O_{MCF-i}$).

L'axe $O_0$ correspondant au centre la fibre optique multi-coeur définit l'axe optique principal du système. L'axe $O_{MCF-i}$ est donc parallèle à l'axe principal du système, et espacé d'une distance $e_i$ par rapport à cet axe principal.

Le système de couplage selon l'invention permet de transmettre le faisceau optique issu du coeur $C_{MCF-i}$ de la fibre optique multi-coeur vers le coeur de la fibre optique mono-coeur $SCF-j$, étant entendu que le faisceau peut également être transmis dans le sens opposé.

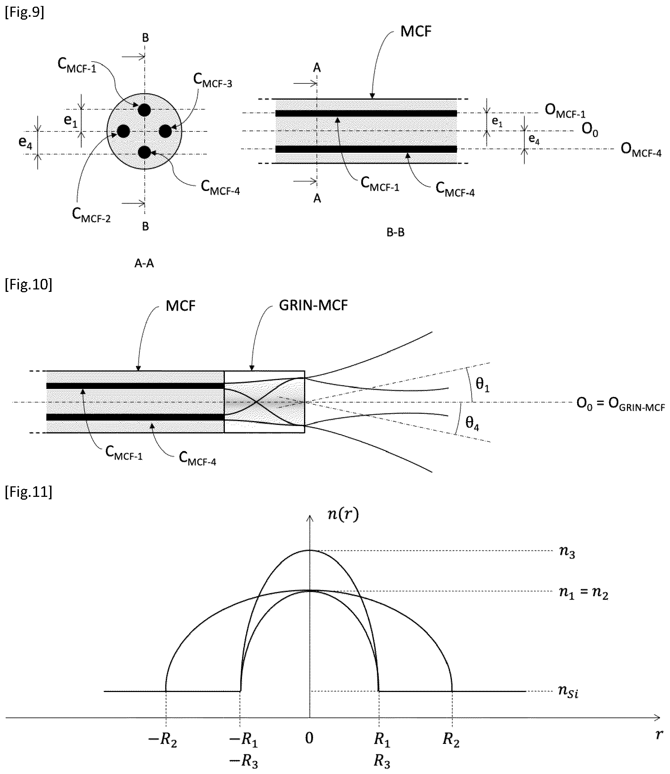

Selon un premier exemple de réalisation illustré par la **[Fig.9]**, la fibre optique multi-coeur (MCF) peut comprendre 4 coeurs ($C_{MCF-1}$, $C_{MCF-2}$, $C_{MCF-3}$, $C_{MCF-4}$). Selon cet exemple, le centre de chacun de ces coeurs est espacé d'une distance $e_i$ ($e_1$, $e_4$) par rapport à l'axe principal du système ($O_0$). Plus précisément, la **[Fig.9]** représente d'une part, une section transversale (A-A) d'une fibre optique multi-coeur, avec une répartition uniforme des 4 coeurs autour de l'axe optique principal du système ($O_0$) ; et d'autre part, la **[Fig.9]** représente une section longitudinale (B-B) de cette fibre optique, passant par l'axe optique principal du système, au niveau des coeurs $C_{MCF-1}$, et $C_{MCF-4}$. Le plan de cette section longitudinale B-B comprend donc les axes $O_0$, $O_{MCF-1}$ et $O_{MCF-4}$.

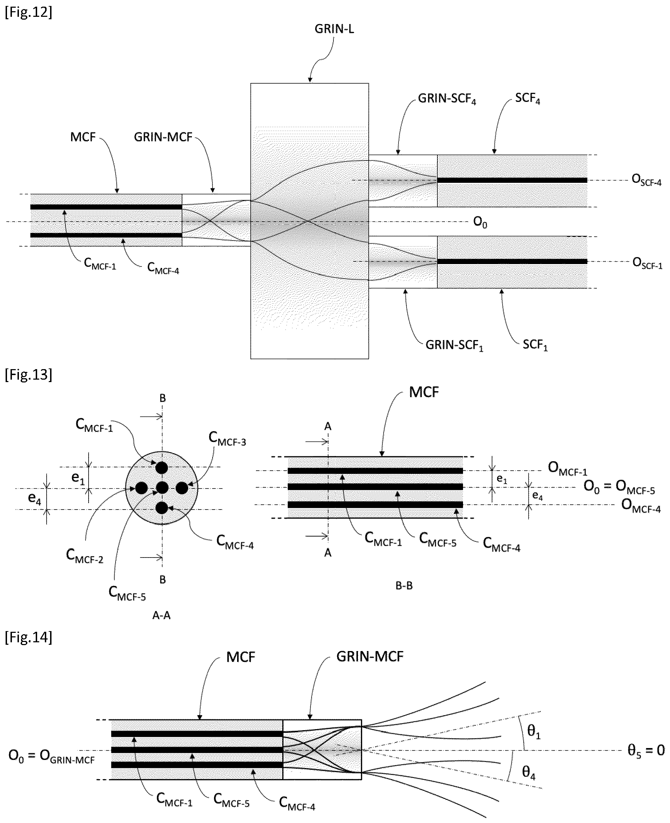

Selon un deuxième exemple de réalisation illustré par la **[Fig.13]**, la fibre optique multi-coeur (MCF) peut comprendre un coeur central. Plus particulièrement, selon la **[Fig.13]**, la fibre optique multi-coeur peut comprendre cinq coeurs ($C_{MCF-1}$, $C_{MCF-2}$, $C_{MCF-3}$, $C_{MCF-4}$, $C_{MCF-5}$). Selon cet exemple, le centre de chacun de ces coeurs est espacé d'une distance $e_i$ ($e_1$, $e_4$) par rapport à l'axe principal du système ($O_0$), avec une distance nulle pour le coeur $C_{MCF-5}$. Le coeur $C_{MCF-5}$ est donc positionné au centre de la fibre multi-coeur. Plus précisément, la **[Fig.13]** représente d'une part, une section transversale (A-A) d'une fibre optique multi-coeur, avec une répartition uniforme de quatre coeurs autour de l'axe optique principal du système ($O_0$) et un coeur central ; et d'autre part, la **[Fig.13]** représente une section longitudinale (B-B) de cette fibre optique, passant par l'axe optique principal du système, au niveau des coeurs $C_{MCF-1}$, $C_{MCF-4}$ et $C_{MCF-5}$. Le plan de cette section longitudinale B-B comprend donc les axes $O_0$, $O_{MCF-1}$, $O_{MCF-4}$ et $O_{MCF-5}$, avec les axes $O_0$ et $O_{MCF-5}$ confondus.

### 1.2. Fibre optique mono-coeur (SCF)

D'autre part, le système de couplage met en oeuvre au moins une fibre optique mono-coeur. Comme précédemment énoncé, le coeur de la fibre mono-coeur peut être monomode, multimode ou apte à supporter une transmission du type WDM.

Comme illustré par la **[Fig.2]** et la **[Fig.4],** la fibre mono-coeur (SCF$_j$) a un diamètre $d_{SCF-j}$. Ce diamètre $d_{SCF-j}$ est typiquement compris entre 80 et 225$\mu$m, plus particulièrement entre 80 et 125$\mu$m, par exemple 125$\mu$m. La fibre mono-coeur comprend un coeur C$_{SCF-j}$. Le diamètre du faisceau optique au sein du coeur est $\omega_{SCF-j}$. Enfin, les fibres mono-coeurs peuvent présenter un décalage radial par rapport à la fibre optique multi-coeur, fonction d'un paramètre de coeur de la fibre optique multi-coeur. Plus particulièrement, ce décalage radial peut être défini en fonction de $e_i$, par une distance $h_j$ définie entre le centre de la fibre mono-coeur (correspondant à un axe O$_{SCF-j}$), et l'axe optique principal du système. L'axe O$_{SCF-i}$ est donc parallèle à l'axe principal du système, et espacé d'une distance $h_j$ par rapport à cet axe principal. Plus précisément, cette distance $h_j$ peut être définie par la formule suivante :

$$h_j = e_i \times \frac{n_1 \times g_1}{n_2 \times g_2}$$

avec

$n_1$ l'indice de réfraction au centre de la section de fibre à gradient d'indice couplée à la fibre multi-coeur ; et
$g_1$ le coefficient quadratique de la section de fibre à gradient d'indice couplée à la fibre multi-coeur ;
$n_2$ l'indice de réfraction au centre de la lentille à gradient d'indice ; et
$g_2$ le coefficient quadratique de la lentille à gradient d'indice.

Cette distance $h_j$ permet d'optimiser le placement des fibres optiques mono-coeurs, permettant ainsi d'obtenir un système de couplage compact. De plus, cette distance est choisie de manière à être supérieure à une valeur seuil prédéfinie en fonction du diamètre des fibres mono-coeurs.

1.3. Section de fibre à gradient d'indice (GRIN-MCF) à l'extrémité de la fibre multi-coeur

Comme illustré par la **[Fig.5],** l'extrémité de la fibre optique multi-coeur (MCF) est couplée à une section de fibre à gradient d'indice de forme cylindrique, permettant d'obtenir une première extrémité micro-lentillée (GRIN-MCF). Ainsi, cette section de fibre à gradient d'indice a une fonction de lentillage et de collimation afin de contrôler le rayon et l'angle du faisceau optique transmis.

Le diamètre de la section de fibre à gradient d'indice est $d_{GRIN-MCF}$. Ce diamètre $d_{GRIN-MCF}$ peut être compris entre 80 et 400$\mu$m, et plus particulièrement compris entre 80 et 250$\mu$m. Selon un exemple de réalisation, le diamètre $d_{GRIN-MCF}$ est avantageusement similaire au diamètre de la fibre multi-coeur $d_{MCF}$. Cependant, une tolérance de quelques centaines de micromètres peut être appliquée entre $d_{GRIN-MCF}$ et $D_{MCF}$. En effet, il est possible de souder (assembler) des fibres de diamètres différents avec une tolérance de l'ordre de quelques 100 $\mu$m. Plus particulièrement, la tolérance suivante peut être appliquée : $d_{GRIN-MCF} = d_{MCF} \pm 200\mu m$. Par exemple, une fibre optique multi-coeur, ayant un diamètre $d_{MCF}$ égal à 125$\mu$m, peut être couplée à une section de fibre à gradient d'indice ayant un diamètre $d_{GRIN-MCF}$ égal à 250$\mu$m. Ou selon un autre exemple, illustré par les exemples de la **[Fig.10]** et de la **[Fig.14],** une fibre optique multi-coeur, ayant un diamètre $d_{MCF}$ égal à 125$\mu$m, peut être couplée à une section de fibre à gradient d'indice ayant un diamètre $d_{GRIN-MCF}$ égal à 125$\mu$m.

Ce couplage peut ainsi être effectué par soudage en raison de la similarité dimensionnelle des diamètres de ces deux éléments.

De plus, la section de fibre à gradient d'indice présente un axe central O$_{GRIN-MCF}$. Selon un mode de réalisation particulier, cet axe O$_{GRIN-MCF}$ est aligné avec l'axe optique principal du système O$_0$, avec une tolérance de $< \pm$ 1$\mu$m. Ainsi, selon un exemple de réalisation particulier illustré par la **[Fig.5],** cet axe central O$_{GRIN-MCF}$ est confondu avec l'axe principal du système O$_0$.

La section de fibre à gradient d'indice (GRIN-MCF) peut être composée de verre organique ou minéral. Le matériau utilisé peut être dopée pour obtenir un profil d'indice de réfraction spécifique. Selon un exemple de réalisation, ce profil est décroissant du centre de la section vers sa circonférence. Ainsi, l'indice de réfraction au centre de la section de fibre à gradient d'indice est $n_1$. Selon un exemple de réalisation dans lequel la section est en silice pure, cet indice $n_1$ est supérieur à l'indice de réfraction de la silice $n_{Si}$, avec $n_{Si}$=1,457 à 632,8nm (pour un laser HeNe). Dans ce cas, le profil d'indice de réfraction peut être obtenu par dopage de la silice avec un ou plusieurs éléments permettant d'augmenter ou de diminuer l'indice de réfraction de la silice (Ge, P, Al, Cl, Ti, Br, B, F).

Le coefficient quadratique de la section à gradient d'indice est $g_1$. Ce coefficient quadratique $g_1$ présente des valeurs typiquement comprises entre 0,5 et 10 mm$^{-1}$.

La longueur de la section à gradient d'indice est $l_1$. Cette longueur $l_1$ est comprise entre 100$\mu$m et 10mm, par exemple égale à 500$\mu$m. Cette longueur $l_1$ définie en fonction du coefficient quadratique de la section $g_1$. Plus particulièrement, cette longueur est définie par la formule :

$$l_1 = \frac{\pi}{2 \times g_1}$$

Comme illustré par la **[Fig.2]**, le diamètre du faisceau optique à l'interface entre la section de fibre à gradient d'indice de la fibre optique multi-coeur et la lentille à gradient d'indice est $\omega_1$. Ce diamètre $\omega_1$ peut être défini par la formule suivante (avec $\lambda$ la longueur d'onde du faisceau transmis) :

$$\omega_1 = \frac{\lambda}{\pi \times n_1 \times g_1 \times \omega_0}$$

Comme illustré par la **[Fig.5]**, l'angle du faisceau optique, issu (ou en direction) du coeur $C_{MCF-i}$, en sortie (ou en entrée) de la section de fibre à gradient d'indice est $\theta_i$. Cet angle peut être défini par la formule suivante :

$$\theta_i = e_i \times g_1$$

Ainsi, la section de fibre à gradient d'indice permet remplacer les ensembles de micro-lentilles de l'art antérieur. Cette section présente une fonction de lentillage et de collimation afin d'orienter et de contrôler le faisceau optique transmis. L'ensemble des paramètres susmentionnés sont co-dépendants et peuvent être adaptés pour obtenir les dimensions et les orientations souhaités, et ainsi optimiser la transmission du faisceau optique. De plus, en raison des dimensions de cette section de fibre à gradient d'indice, elle peut être directement soudée à la fibre optique multi-coeur. Le soudage permettant ainsi de fixer définitivement un alignement spécifique des éléments. Cela permet donc de limiter les erreurs d'alignement est de faciliter la mise en oeuvre du système de couplage, tout en obtenant un ensemble compact.

## 1.4. Section de fibre à gradient d'indice (GRIN-SCF) à l'extrémité de chaque fibre mono-coeur

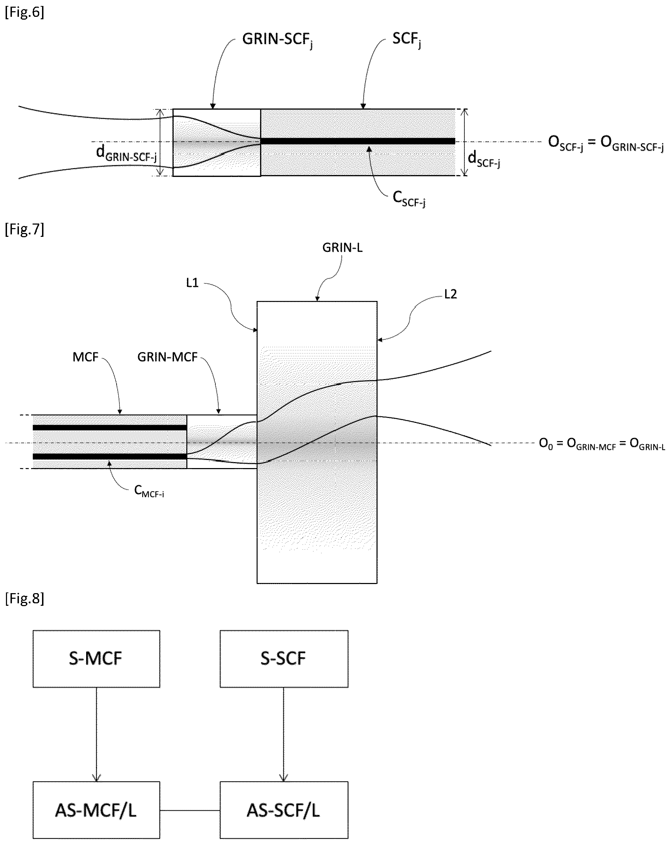

Comme illustré par la **[Fig.6],** l'extrémité d'une fibre optique mono-coeur (SCF$_j$) est couplée à une section de fibre à gradient d'indice de forme cylindrique, permettant d'obtenir une deuxième extrémité micro-lentillée (GRIN-SCF$_j$). Ainsi, cette section de fibre à gradient d'indice a une fonction de lentillage et de collimation afin de contrôler le rayon et l'angle du faisceau optique transmis.

Le diamètre de la section de fibre à gradient d'indice est $d_{GRIN-SCF-j}$. Ce diamètre $d_{GRIN-SCF-j}$ peut être compris entre 80 et 400$\mu$m, et plus particulièrement entre 80 et 250$\mu$m. Selon un exemple de réalisation, le diamètre $d_{GRIN-SCF-j}$ est avantageusement similaire au diamètre de la fibre mono-coeur $d_{SCF-j}$. Cependant, une tolérance de quelques centaines de micromètres peut être appliquée entre $d_{GRIN-SCF-j}$ et $d_{SCF-j}$. En effet, il est possible de souder/assembler des fibres de diamètres différents avec une tolérance de l'ordre de quelques 100 $\mu$m. Plus particulièrement, la tolérance suivante peut être appliquée : $d_{GRIN-SCF-j} = d_{SCF-j} \pm 200\mu m$. Par exemple, une fibre optique multi-coeur, ayant un diamètre $d_{SCF-j}$ égal à 125$\mu$m, peut être couplée à une section de fibre à gradient d'indice ayant un diamètre $d_{GRIN-SCF-j}$ égal à

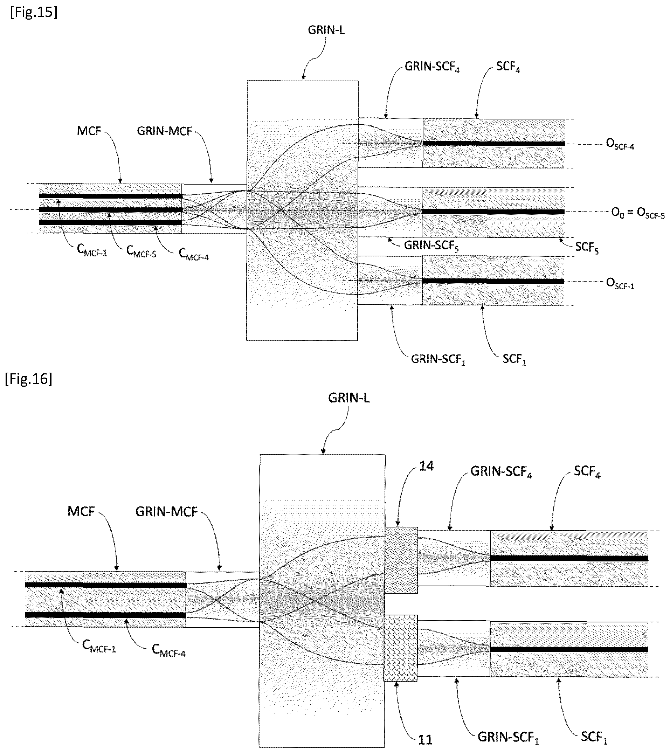

250$\mu$m. Ou selon un autre exemple, illustré par les exemples de la **[Fig.12]** et de la **[Fig.15],** une fibre optique multi-coeur, ayant un diamètre $d_{SCF-j}$ égal à 125$\mu$m, peut être couplée à une section de fibre à gradient d'indice ayant un diamètre $d_{GRIN-SCF-j}$ égal à 125$\mu$m.

Ce couplage peut ainsi être effectué par soudage en raison de la similarité dimensionnelle des diamètres de ces deux éléments.

De plus, la section de fibre à gradient d'indice présente un axe central $O_{GRIN-SCF-j}$. Selon un mode de réalisation particulier, cet axe $O_{GRIN-SCF-j}$ est aligné avec l'axe de la fibre mono-coeur $O_{SCF-j}$, avec une tolérance de $< \pm$ 1$\mu$m. Ainsi, selon un exemple de réalisation particulier illustré par la **[Fig.6],** cet axe central $O_{GRIN-SCF-j}$ est confondu avec l'axe de la fibre mono-coeur $O_{SCF-j}$.

La section de fibre à gradient d'indice (GRIN-SCF$_j$) peut être composée de verre organique ou minéral. Le matériau utilisé peut être dopé pour obtenir un profil d'indice de réfraction spécifique. Selon un exemple de réalisation, ce profil est décroissant du centre de la section vers sa circonférence. Ainsi, l'indice de réfraction au centre de la section de fibre à gradient d'indice est $n_{3-j}$. Selon un exemple de réalisation dans lequel la section est en silice pure, cet indice $n_{3-j}$ est supérieur à l'indice de réfraction de la silice $n_{Si}$, avec $n_{Si}$=1,457 à 632,8nm (pour un laser HeNe). Dans ce cas, le profil d'indice de réfraction peut être obtenu par dopage de la silice avec un ou plusieurs éléments permettant d'augmenter ou de diminuer l'indice de réfraction de la silice (Ge, P, Al, Cl, Ti, Br, B, F).

Le coefficient quadratique de la section à gradient d'indice est $g_{3-j}$. Ce coefficient quadratique $g_3$ présente des valeurs comprises typiquement entre 0,5 et 10 mm$^{-1}$.

La longueur de la section de fibre à gradient d'indice (GRIN-SCF$_j$) est $l_{3-j}$. Cette longueur $l_{3-j}$ est comprise entre 100$\mu$m et 10mm, par exemple égale à 500$\mu$m. Cette longueur $l_{3-j}$ définie en fonction du coefficient quadratique de la section $g_{3-j}$. Plus particulièrement, cette longueur est définie par la formule :

$$l_{3-j} = \frac{\pi}{2 \times g_{3-j}}$$

Comme illustré par la **[Fig.2],** le diamètre du faisceau optique à l'interface entre la section de fibre à gradient d'indice de la fibre optique multi-coeur et la lentille à gradient d'indice est $\omega_2$. Ce diamètre $\omega_2$ peut être défini par la formule suivante (avec $\lambda$ la longueur d'onde du faisceau transmis) :

$$\omega_2 = \frac{\lambda}{\pi \times n_2 \times g_2 \times \omega_1}$$

avec $\omega_2$ le diamètre du faisceau à l'interface entre la section de fibre à gradient d'indice GRIN-SCFj et la lentille à gradient d'indice (GRIN-L).

Selon l'exemple illustré par la **[Fig.6],** l'angle du faisceau optique, issu (ou en direction) de la fibre optique mono-coeur SCF$_j$, en sortie (ou en entrée) de la section de fibre à gradient d'indice est nul.

Comme indiqué précédemment en relation avec la fibre optique mono-coeur, la section de fibre à gradient d'indice associée à une fibre mono-coeur présente un décalage radial par rapport à la fibre optique multi-coeur et la section de fibre à gradient d'indice associée, fonction d'un paramètre de coeur de la fibre multi-coeur. Plus particulièrement, ce décalage radial peut être défini par la distance $h_j$ entre le centre de la fibre mono-coeur et/ou le centre de la section de fibre à gradient d'indice associée (correspondant respectivement à un axe O$_{SCF-j}$ et/ou un O$_{GRIN-SCF-j}$) d'une part, et l'axe optique principal du système O$_0$ d'autre part.

Ainsi, la section de fibre à gradient d'indice permet remplacer les ensembles de micro-lentilles de l'art antérieur. Cette section présente une fonction de lentillage et de collimation afin d'orienter et de contrôler le faisceau optique transmis. L'ensemble des paramètres susmentionnés sont co-dépendants et peuvent être adaptés pour obtenir les dimensions et les orientations souhaités, et ainsi optimiser la transmission du faisceau optique. De plus, en raison des dimensions de cette section de fibre à gradient d'indice, elle peut être directement soudée à la fibre optique multi-coeur. Le soudage permettant ainsi de fixer définitivement un alignement spécifique des éléments. Cela permet donc de limiter les erreurs d'alignement est de faciliter la mise en oeuvre du système de couplage, tout en obtenant un ensemble extrêmement compact.

### 1.5. Lentille à gradient d'indice (GRIN-L)

Comme illustré par la **[Fig.7],** la section de fibre à gradient d'indice (GRIN-MCF) précédemment couplée d'une part à la fibre multi-coeur (MCF) est couplée d'autre part à la lentille à gradient d'indice (GRIN-L). Plus particulièrement, mais non exclusivement, la lentille à gradient d'indice est de forme globale cylindrique et présente deux interfaces de connexion (L1, L2). Une première interface (L1) est donc couplée à la section de fibre à gradient d'indice de la fibre multi-coeur (GRIN-MCF), tandis qu'une deuxième interface (L2) est destinée à être couplée aux sections de fibre à gradient d'indice des fibres mono-coeur (GRIN-SCF$_j$).

Ces couplages peuvent être effectués par assemblage mécanique amovible, par collage, ou tout autre assemblage adapté.

Le diamètre de la section de fibre à gradient d'indice est $d_{GRIN-L}$. Ce diamètre $d_{GRIN-L}$ peut être compris entre 125µm et 4mm, typiquement égal à 1mm.

L'alignement de la lentille avec les autres éléments du système est limité par les éventuels défauts présents sur les bords de la lentille. Plus précisément, la lentille à gradient d'indice présente un axe central O$_{GRIN-L}$. Selon un mode de réalisation, cet axe O$_{GRIN-L}$ est aligné avec l'axe principal du système O$_0$, avec une tolérance de 3µm, ou encore avec une tolérance de 1µm. Ainsi, selon un exemple de réalisation particulier illustré par la **[Fig.7],** cet axe central O$_{GRIN-L}$ est confondu avec l'axe principal du système O$_0$.

La lentille à gradient d'indice (GRIN-L) peut être composée de verre organique ou minéral. Le matériau utilisé peut être dopée pour obtenir un profil d'indice de réfraction spécifique. Selon un exemple de réalisation, ce profil est décroissant du centre de la lentille vers sa circonférence. Ainsi, l'indice de réfraction au centre de la lentille à gradient d'indice est $n_2$. Selon un exemple de réalisation dans lequel la lentille est en silice pure, cet indice $n_2$ est supérieur à l'indice de réfraction de la silice $n_{Si}$, avec $n_{Si}$=1,457 à 632,8nm (pour un laser HeNe). Dans ce cas, le profil d'indice de réfraction peut être obtenu par dopage de la silice avec un ou plusieurs éléments permettant d'augmenter ou de diminuer l'indice de réfraction de la silice (Ge, P, Al, Cl, Ti, Br, B, F).

Le coefficient quadratique de la section à gradient d'indice est $g_2$. Ce coefficient quadratique $g_2$ présente des valeurs comprises typiquement entre 0,5 et 10 mm$^{-1}$.

La longueur de la section de fibre à gradient d'indice (GRIN-L) est $l_2$. Cette longueur $l_2$ est comprise entre 500µm et 10mm, typiquement de l'ordre du millimètre. Cette longueur $l_2$ définie en fonction du coefficient quadratique de la lentille $g_2$. Plus particulièrement, cette longueur est définie par la formule :

$$l_2 = \frac{\pi}{2 \times g_2}$$

Ainsi, cette lentille à gradient d'indice a également une fonction de lentillage et de collimation afin de contrôler le rayon et l'angle du faisceau optique transmis. L'ensemble des paramètres susmentionnés sont co-dépendants et peuvent être adaptés pour obtenir les dimensions et les orientations souhaités, et ainsi optimiser la transmission du faisceau optique.

### 2. Procédé de couplage

Le procédé de couplage selon l'invention peut mettre en oeuvre différents types d'assemblages tels que le soudage, l'assemblage mécanique amovible, l'assemblage mécanique par collage, etc.

Plus particulièrement, le procédé comprend le soudage des sections à gradients d'indices (GRIN-MCF, GRIN-SCF) aux fibres multi-coeur (MCF) et mono-coeurs (SCF) correspondantes. Ainsi, comme illustré par la **[Fig.8]** le procédé de couplage selon l'invention comprend :

- une étape de soudage (S-MCF) d'une première section de fibre à gradient d'indice en extrémité de ladite fibre multi-coeur pour former une première extrémité micro-lentillée ;

- pour chaque fibre mono-coeur (SCF) dudit ensemble, une étape de soudage (S-SCF) d'une deuxième section de fibre à gradient d'indice (GRIN-SCF) en extrémité de ladite fibre mono-coeur pour former une deuxième extrémité micro-lentillée ;

Les sections de fibre à gradient d'indice ayant préférentiellement un diamètre similaire à celui des fibres optiques correspondantes, le soudage est ainsi facilité, et cela permet de créer des extrémités micro-lentillés correctement alignées et définitivement fixées aux fibres optiques multi-coeur et mono-coeurs.

De plus, chacune des extrémités micro-lentillées ainsi formées peut être assemblée mécaniquement à la lentille à gradient d'indice (GRIN-L), par exemple, par collage, via une liaison mécanique amovible telle que des férules, etc. Plus particulièrement, comme illustré par la **[Fig.8]**, le procédé de couplage selon l'invention comprend également :

- une étape d'assemblage mécanique (AS-MCF/L) de la première extrémité micro-lentillée de la fibre multi-coeur avec une première interface d'une lentille à gradient d'indice ;
- une étape d'assemblage mécanique (AS-SCF/L) de la deuxième extrémité micro-lentillée de la fibre mono-coeur avec une deuxième interface de ladite lentille à gradient d'indice.

Ainsi, un tel procédé de couplage, permet un assemblage simple où l'alignement des différents éléments est facilité. En particulier, l'utilisation de sections de fibres à gradient d'indice ayant un diamètre similaire au diamètre des fibres multi/mono-coeur permet une fixation définitive par soudage. Le système ainsi obtenu est compact et simple à mettre en oeuvre.

Il est entendu que les éléments décrits en relation avec le système peuvent s'appliquer au procédé et inversement. Plus particulièrement, le décalage radial d'une fibre mono-coeur (et de l'extrémité micro-lentillée correspondante) par rapport à la fibre multi-coeur (et à l'extrémité micro-lentillée correspondante) dépend d'un paramètre de coeur de la fibre multi-coeur. Plus précisément, l'axe optique de la fibre mono-coeur assemblée présente avantageusement un décalage d'une distance $h$ avec l'axe optique principal du système, la distance $h$ étant définie en fonction de la distance e entre l'axe optique principal du système et l'axe optique du coeur de la fibre optique multi-coeur dont le faisceau est transmis à la fibre optique mono-coeur assemblée. Cette distance $h$ est supérieure à une valeur seuil choisie en fonction du diamètre des fibres mono-coeurs, typiquement une valeur seuil minimale facilitant le couplage des fibres mono-coeurs sur la lentille GRIN-L

## 3. Exemples de modes de réalisation

### 3.1. Exemple 1

Un premier exemple particulier d'un système de couplage selon l'invention est représenté par la **[Fig.9]**, la **[Fig.10]**, la **[Fig.11]** et la **[Fig.12]**. Selon ce premier exemple, la fibre optique multi-coeur présente quatre coeurs ($C_{MCF-1}$, $C_{MCF-2}$, $C_{MCF-3}$, $C_{MCF-4}$), et le système comprend quatre fibres mono-coeurs ($SCF_1$, $SCF_2$, $SCF_3$, $SCF_4$), la transmission du signal optique s'effectuant de la fibre multi-coeur vers les fibres mono-coeurs.

Selon cet exemple, le faisceau optique issu du coeur $C_{MCF-1}$ est destiné à être transmis à la fibre mono-coeur $SCF_1$, le faisceau issu du coeur $C_{MCF-2}$ est destiné à être transmis à la fibre $SCF_2$, le faisceau issu du coeur $C_{MCF-3}$ est destiné à être transmis à la fibre $SCF_3$, le faisceau issu du coeur $C_{MCF-4}$ est destiné à être transmis à la fibre $SCF_4$,

De plus, le centre de chacun de ces coeurs est espacé d'une distance $e_i$ ($e_1$, $e_4$) par rapport à l'axe principal du système ($O_0$). Plus précisément, la **[Fig.9]** représente d'une part, une section transversale (A-A) d'une fibre optique multi-coeur, avec une répartition uniforme des quatre coeurs autour de l'axe optique principal du système ($O_0$) ; et d'autre part, la **[Fig.9]** représente une section longitudinale (B-B) de cette fibre optique, passant par l'axe optique principal du système, au niveau des coeurs $C_{MCF-1}$, et $C_{MCF-4}$. Le plan de cette section longitudinale B-B comprend donc les axes $O_0$, $O_{MCF-1}$ et $O_{MCF-4}$.

Dans le présent exemple, la longueur d'onde $\lambda$ choisie est égale à 380$\mu$m. Le diamètre de l'ensemble des fibres optiques et des sections de fibre à gradient d'indice est égal à 125$\mu$m. De plus, chaque section de fibre à gradient d'indice est parfaitement alignée avec la fibre optique à laquelle elle est couplée.

Concernant la fibre multi-coeur (MCF), le centre de chacun de ses coeurs est à une distance e=10$\mu$m du centre de la fibre multi-coeur (correspondant à l'axe optique principal du système $O_0$). De plus, le diamètre du faisceau optique $\omega_0$ est égal à 5$\mu$m en sortie de la fibre multi-coeur.

Concernant la section de fibre à gradient d'indice de la fibre multi-coeur (GRIN-MCF), telle qu'illustrée par la **[Fig.10]** et la [Fig.12] l'indice de réfraction au centre de la section $n_1$ est égal à 1,472. Le coefficient quadratique $g_1$ de la section est égal à 4,3mm$^{-1}$. La longueur $l_1$ de la section est donc déterminé comme suit :

$$l_1 = \frac{\pi}{2 \times g_1} = 365 \; \mu m$$

. De plus, le diamètre des faisceaux $\omega_1$ en sortie de la section de fibre à gradient d'indice est déterminé comme suit :

$$\omega_1 = \frac{\lambda}{\pi \times n_1 \times g_1 \times \omega_0} = 3,8 \; mm$$

. Et enfin, comme indiqué par la **[Fig.10]**, les angles $\theta_1$ et $\theta_4$ des faisceaux issus des coeurs $C_{MCF-1}$ et $C_{MCF-4}$, en sortie de la section, mesurés par rapport à l'axe optique principal du système $O_0$, sont égaux à $\theta_i = e \times g_1 = 0,043$ $rad$.

Concernant la lentille à gradient d'indice (GRIN-L), telle qu'illustrée par la **[Fig.12]**, le diamètre de la lentille $d_2$ est d'environ 1mm. L'indice $n_2$ de réfraction au centre de la lentille est égal à $n_1$. Le coefficient quadratique $g_2$ de la lentille est égal à $0,6mm^{-1}$. La longueur $l_1$ de la section est donc déterminée comme suit

$$l_2 = \frac{\pi}{2 \times g_2} = 2618 \ \mu m$$

. De plus, le diamètre des faisceaux $\omega_1$ en sortie de la section de fibre à gradient d'indice est déterminé comme suit :

$$\omega_2 = \frac{\lambda}{\pi \times n_2 \times g_2 \times \omega_1} = \omega_0 \times \frac{n_1 \times g_1}{n_2 \times g_2} =$$

$$35,8 \ \mu m.$$

Enfin, l'angle du faisceau optique par rapport à l'axe optique principal en sortie de la lentille est nul.

Concernant les sections de fibre à gradient d'indice des fibres mono-coeurs (GRIN-SCF$_1$, GRIN-SCF$_2$, GRIN-SCF$_3$, GRIN-SCF$_4$), telles qu'illustrées par la **[Fig.12]**, l'indice de réfraction au centre de la section $n_3$ est égal à 1,6. Le diamètre $\omega_3$ du faisceau optique en sortie de section (et en entrée de la fibre mono-coeur) est égal à $\omega_3 = \omega_0 = 5$ $\mu m$. Enfin, la distance entre l'axe optique du système et le centre de chacune des fibres mono-coeur est égal à

$$h = e \times \frac{n_1 \times g_1}{n_2 \times g_2} = 71 \ \mu m$$

.

Concernant les fibres optiques mono-coeurs (SCF$_1$, SCF$_2$, SCF$_3$, SCF$_4$) celles-ci sont axées sur les sections de fibre à gradient d'indice auxquelles elles sont couplées, et sont donc également décalée d'une distance $h = 71$ $\mu m$ par rapport à l'axe principal du sysytème $O_0$.

Dans le cas d'une fibre optique multi-coeur selon ce premier exemple, les paramètres optiques sont choisis pour que la distance $h$ réponde à l'inégalité suivante :

$$h > \frac{d_{SCF-j}}{2}$$

. Dans le cas présent : $h > 62,5$ $\mu m$.

Enfin, dans le cas de ce premier exemple, les sections de fibre à gradient d'indice et la lentille à gradient d'indice utilisés présentent des profils d'indice de réfraction spécifiques. Ainsi, la **[Fig.11]** illustre l'évolution de l'indice de réfraction en fonction de la distance au centre de chacun de ces éléments. Plus précisément, en considérant $R1 = d_{GRIN-MCF}/2$, l'indice de réfraction de la section de fibre à gradient d'indice de la fibre multi-coeur présente une valeur maximale en son centre égale à $n_1$, puis une valeur décroissante jusqu'à $n_{Si}$ pour une distance au centre de $R1$ ou $-R1$. En considérant $R2 =$ $d_{GRIN-L}/2$, l'indice de réfraction de la lentille à gradient d'indice présente une valeur maximale en son centre égale à $n_2$, puis une valeur décroissante jusqu'à $n_{Si}$ pour une distance au centre de $R2$ ou $-R2$. Enfin, en considérant $R3 = d_{GRIN-SCF}/2$, l'indice de réfraction de la section de fibre à gradient d'indice d'une fibre mono-coeur présente une valeur maximale en son centre égale à $n_3$, puis une valeur décroissante jusqu'à $n_{Si}$ pour une distance au centre de $R3$ ou $-R3$.

### 3.2. Exemple 2

Un deuxième exemple particulier d'un système de couplage selon l'invention est représenté par la **[Fig.13]**, la **[Fig.14]** et la **[Fig.15]**.

Selon cet exemple, une fibre optique multi-coeur peut présenter un coeur central ($C_{MCF-5}$), et des coeurs périphériques ($C_{MCF-1}$, $C_{MCF-2}$, $C_{MCF-3}$, $C_{MCF-4}$).

En appliquant la technique précédemment décrite, le faisceau issu du coeur central de la fibre multi-coeur n'est pas dévié, pour être transmis à une fibre optique mono-coeur. En effet, puisque $e_5 = 0$, alors : $\theta_5 = e \times g_1 = 0$ et h = 0.

Il n'y a donc pas de décalage de la fibre optique mono-coeur vers laquelle est transmis le faisceau issu du coeur central de la fibre multi-coeur. La fibre optique mono-coeur SCF$_5$ est centrée sur le même axe principal que la fibre optique multi-coeur.

Plus précisément, la **[Fig.13]** représente d'une part, une section transversale (A-A) d'une fibre optique multi-coeur, avec une répartition uniforme de quatre coeurs autour de l'axe optique principal du système ($O_0$) et un coeur central ; et d'autre part, la **[Fig.13]** représente une section longitudinale (B-B) de cette fibre optique, passant par l'axe optique principal du système, au niveau des coeurs $C_{MCF-1}$, $C_{MCF-4}$ et $C_{MCF-5}$. Le plan de cette section longitudinale B-B comprend donc les axes $O_0$, $O_{MCF-1}$, $O_{MCF-4}$ et $O_{MCF-5}$, avec les axes $O_0$ et $O_{MCF-5}$ confondus.

## 4. Suppléments

### 4.1. Fonctions optiques additionnelles

Des fonctions optiques supplémentaires peuvent être ajoutées au système, elles peuvent être mises en oeuvre par l'ajout d'au moins un des composants optiques suivants :

- une lame optique ;
- un filtre optique ;
- un composant anti-reflet ;
- un isolateur optique.

Ces composants peuvent être disposés entre deux éléments du système de couplage, en particulier, entre la lentille à gradient d'indice et l'une des sections de fibre à gradient d'indice de la fibre multi-coeur et/ou d'une fibre mono-coeur.

Selon un mode de réalisation illustré par la **[Fig.16],** un composant additionnel présentant une fonction optique spécifique est ajouté entre la lentille à gradient d'indice et les sections de fibre à gradient d'indice associées à des fibres mono-coeurs. Plus particulièrement, chacune des sections illustrées (GRIN-SCF$_1$, GRIN-SCF$_4$) est séparée de la lentille (GRIN-L) par un composant optique distinct (11, 14). Cependant, ces composants additionnels peuvent également être identiques pour l'ensemble des sections de fibre à gradient d'indice, ou peuvent être ajoutés uniquement à l'extrémité de certaines d'entre elles.

Ainsi, selon un mode de réalisation particulier, au moins une des sections de fibre à gradient d'indice de la fibre multi-coeur ou d'une fibre mono-coeur est couplée en entrée et/ou en sortie de ladite lentille à gradient d'indice via un composant optique additionnel.

Par ailleurs, afin d'ajouter un tel élément additionnel, il est possible de jouer sur le choix des paramètres du gradient d'indice, du diamètre extérieur et de la longueur de la section de fibre à gradient d'indice.

Ces composants additionnels peuvent être mis en place au sein du système selon différentes méthodes, par exemple la méthode dite des « V-groove » (ou rainures en forme de V), ou encore une méthode mettant en oeuvre des fibres montées dans des férules cylindriques avec un manchon (ou « sleeve ») d'alignement. La méthode des « V-groove » met en oeuvre des rainures en forme de V dans lesquels sont placés les éléments à aligner et assembler, la rainure permettant de faciliter l'alignement ; tandis que la méthode de la « sleeve » met en oeuvre un manchon dans lequel sont insérés des férules afin d'aligner les fibres (ou autres éléments) présentes dans ces férules. Ces méthodes peuvent également être utilisées pour l'alignement des autres éléments du système de couplage.

De plus, l'ajout de telle composants optiques additionnels permet d'obtenir un système plus élaboré et complet avec des fonctions optiques supplémentaires, le système restant compact et simple à mettre en oeuvre.

### 4.2. Mise en oeuvre avec des connecteurs de type férules

Le système de couplage selon l'invention peut être mis en oeuvre via l'utilisation de connecteurs spécifiques tels que des férules, permettant de former des blocs d'éléments à interconnecter.

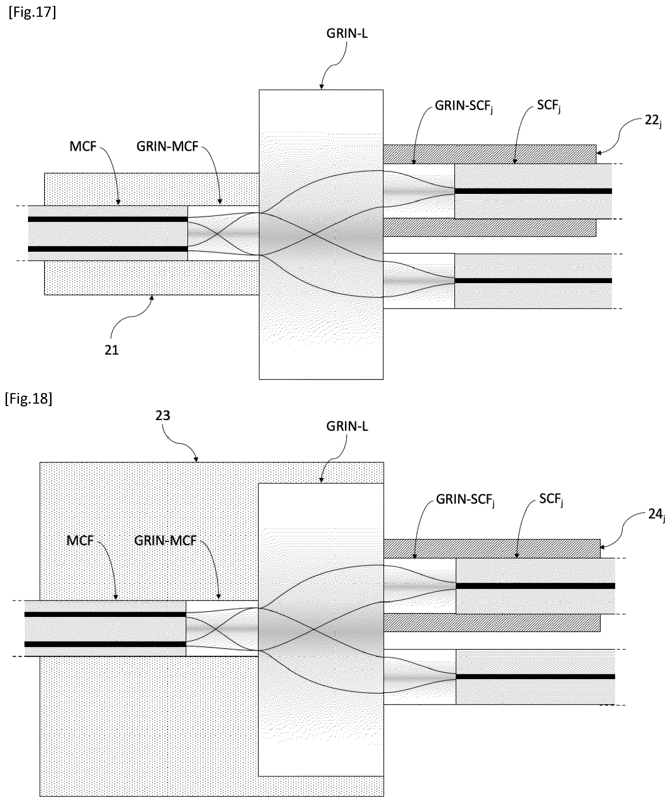

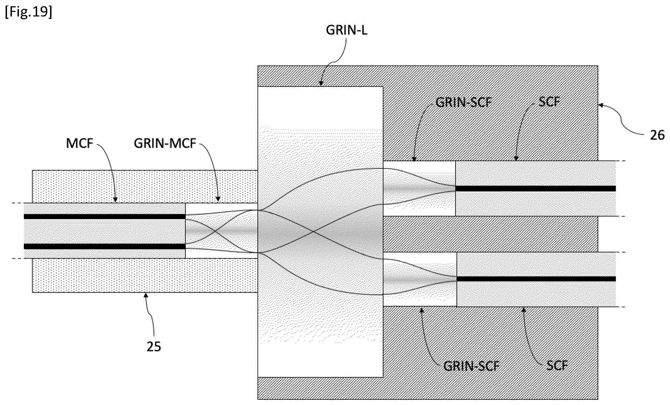

La **[Fig.17]**, la **[Fig.18]** et la **[Fig.19]** illustrent trois configurations différentes pouvant être mises en oeuvre pour permettre l'interconnexion de différents blocs d'éléments du système.

Ainsi, selon un premier exemple, la **[Fig.17]** illustre une première configuration dans laquelle :

- l'extrémité de la fibre multi-coeur (MCF) et la section de fibre à gradient d'indice correspondante (GRIN-MCF) sont comprises dans une férule indépendante (21) ;

- chaque extrémité de fibre mono-coeur (SCF$_j$) et la section de fibre à gradient d'indice correspondante (GRIN-SCF$_j$) sont comprises dans une férule indépendante (22$_j$) ; et
- la lentille à gradient d'indice (GRIN-L) est indépendante.

Selon un deuxième exemple, la **[Fig.18]** illustre une deuxième configuration dans laquelle :

- l'extrémité de la fibre multi-coeur (MCF), la section de fibre à gradient d'indice correspondante (GRIN-MCF) et la lentille à gradient d'indice (GRIN-L) sont comprises dans une même férule (23), d'une part ;
- chaque extrémité de fibre mono-coeur (SCF$_j$) et la section de fibre à gradient d'indice correspondante (GRIN-SCF$_j$) sont comprises dans une férule indépendante (24$_j$), d'autre part.

Enfin, la **[Fig.19]** illustre une troisième configuration dans laquelle :

- l'extrémité de la fibre multi-coeur (MCF) et la section de fibre à gradient d'indice correspondante (GRIN-MCF) sont comprises dans une première férule indépendante (25) d'une part ;
- l'extrémité des fibres mono-coeurs (SCF$_j$), chaque section de fibre à gradient d'indice correspondante (GRIN-SCF$_j$), et la lentille à gradient d'indice (GRIN-L) sont comprises dans une deuxième férule (26), d'autre part.

Ainsi, l'utilisation de tels connecteurs permet de faciliter la mise en oeuvre du système de couplage, en facilitant à l'alignement des éléments et leur interconnexion.

## Revendications

1. Système de couplage entre une fibre optique multi-coeur (MCF) et un ensemble d'au moins une fibre optique mono-coeur (SCF), chaque fibre mono-coeur dudit ensemble étant couplée à un coeur distinct de la fibre multi-coeur, ledit système de couplage comprenant :

   - une lentille à gradient d'indice (GRIN-L), positionnée entre ladite fibre multi-coeur et ladite au moins une fibre mono-coeur ;

   le système étant **caractérisé en ce qu'**il comprend :

   - une première section de fibre à gradient d'indice couplée en extrémité de la fibre multi-coeur pour former une première extrémité micro-lentillée (GRIN-MCF) ;

- pour au moins une fibre mono-coeur dudit ensemble, une deuxième section de fibre à gradient d'indice couplée en extrémité de ladite fibre mono-coeur pour former une deuxième extrémité micro-lentillée (GRIN-SCF) ;

lesdites première et deuxième extrémités micro-lentillées étant couplées de part et d'autre de ladite lentille avec un décalage radial de l'une par rapport à l'autre défini en fonction d'un paramètre de coeur de la fibre multi-coeur.

2. Système de couplage selon la revendication 1, **caractérisé en ce que** le décalage radial d'une fibre mono-coeur est défini par une distance *h*, la distance *h* étant définie comme suit :

$$h = e \times \frac{n_1 \times g_1}{n_2 \times g_2}$$

avec les paramètres optiques suivants :

*e* ledit paramètre de coeur, défini comme étant la distance radiale entre l'axe central de la fibre multi-coeur (MCF) et l'axe du coeur de la fibre multi-coeur auquel ladite fibre mono-coeur est couplée ;
$n_1$ l'indice de réfraction au centre de ladite première section de fibre à gradient d'indice (GRIN-MCF) ;
$g_1$ le coefficient quadratique de ladite première section de fibre à gradient d'indice (GRIN-MCF) ;
$n_2$ l'indice de réfraction au centre de ladite lentille à gradient d'indice (GRIN-L) ;
$g_2$ le coefficient quadratique de ladite lentille à gradient d'indice (GRIN-L).

3. Système de couplage selon la revendication 1, **caractérisé en ce que** :

- la longueur $l_1$ de la première section de fibre à gradient d'indice (GRIN-MCF) de ladite fibre multi-coeur est inversement proportionnelle à son coefficient quadratique $g_1$ ;
- la longueur $l_2$ de la lentille à gradient d'indice (GRIN-L) est inversement proportionnelle à son coefficient quadratique $g_2$ ;
- la longueur $l_3$ de la section de fibre à gradient d'indice (GRIN-SCF) de ladite au moins une fibre mono-coeur, est inversement proportionnelle à son coefficient quadratique $g_3$.

4. Système de couplage selon la revendication 1, **caractérisé en ce que** les coeurs de la fibre optique multi-coeur et l'ensemble d'au moins une fibre optique mono-coeur sont de type monomode.

5. Système de couplage selon la revendication 1, **caractérisé en ce que** lesdites première et deuxième extrémités micro-lentillées sont directement couplées en entrée et en sortie de ladite lentille à gradient d'indice.

6. Système de couplage selon la revendication 1, **caractérisé en ce qu'**au moins une desdites première et deuxième extrémités micro-lentillées est couplée en entrée et/ou en sortie de ladite lentille à gradient d'indice via un composant optique appartenant au groupe comprenant :

- une lame optique ;
- un filtre optique ;
- un composant anti-reflet ;
- un isolateur optique.

7. Système de couplage selon la revendication 1 **caractérisé en ce que** :

- l'extrémité de la fibre multi-coeur (MCF) et la première extrémité micro-lentillée correspondante (GRIN-MCF) sont comprises dans une férule indépendante ;
- chaque extrémité de fibre mono-coeur (SCF) dudit ensemble et la deuxième extrémité micro-lentillée correspondante (GRIN-SCF) sont comprises dans une férule indépendante ; et
- la lentille à gradient d'indice (GRIN-L) est indépendante.

8. Système de couplage selon la revendication 1 **caractérisé en ce que** :

- l'extrémité de la fibre multi-coeur (MCF), la première extrémité micro-lentillée correspondante (GRIN-MCF) et la lentille à gradient d'indice (GRIN-L) sont comprises dans une même férule, d'une part ;
- chaque extrémité de fibre mono-coeur (SCF) dudit ensemble et la deuxième extrémité micro-lentillée correspondante (GRIN-SCF) sont comprises dans une férule indépendante, d'autre part.

9. Système de couplage selon la revendication 1 **caractérisé en ce que :**

- l'extrémité de la fibre multi-coeur (MCF) et la première extrémité micro-lentillée correspondante (GRIN-MCF) sont comprises dans une première férule indépendante d'une part ;
- l'ensemble d'au moins une extrémité de fibre mono-coeur (SCF), chaque deuxième extrémité micro-lentillée correspondante (GRIN-SCF), et la lentille à gradient d'indice (GRIN-L) sont comprises dans une deuxième férule, d'autre part.

**10.** Procédé de couplage d'une fibre optique multi-coeur (MCF) et d'un ensemble d'au moins une fibre optique mono-coeur (SCF), **caractérisé en ce qu'**il comprend :

- soudage (S-MCF) d'une première section de fibre à gradient d'indice (GRIN-MCF) en extrémité de ladite fibre multi-coeur (MCF) pour former une première extrémité micro-lentillée ;
- pour au moins une fibre mono-coeur (SCF) dudit ensemble, soudage (S-SCF) d'une deuxième section de fibre à gradient d'indice (GRIN-SCF) en extrémité de ladite fibre mono-coeur pour former une deuxième extrémité micro-lentillée ;
- assemblage mécanique (AS-MCF/L) de ladite première extrémité micro-lentillée de ladite fibre multi-coeur avec une première interface (L1) d'une lentille à gradient d'indice ;
- assemblage mécanique (AS-SCF/L) de ladite deuxième extrémité micro-lentillée de ladite fibre mono-coeur avec une deuxième interface (L2) de ladite lentille à gradient d'indice, avec un décalage radial par rapport à la première extrémité micro-lentillée, défini en fonction d'un paramètre de coeur de la fibre multi-coeur.

[Fig.1]

[Fig.2]

[Fig.3]

A-A

B-B

[Fig.4]

A-A

B-B

[Fig.5]

[Fig.6]

$$O_{SCF\text{-}j} = O_{GRIN\text{-}SCF\text{-}j}$$

[Fig.7]

$$O_0 = O_{GRIN\text{-}MCF} = O_{GRIN\text{-}L}$$

[Fig.8]

[Fig.9]

A-A

B-B

[Fig.10]

[Fig.11]

[Fig.12]

[Fig.13]

[Fig.14]

[Fig.15]

[Fig.16]

[Fig.17]

GRIN-L

MCF    GRIN-MCF    GRIN-SCF$_j$    SCF$_j$    22$_j$

21

[Fig.18]

23    GRIN-L

MCF    GRIN-MCF    GRIN-SCF$_j$    SCF$_j$    24$_j$

[Fig.19]

Europäisches
Patentamt

European
Patent Office

Office européen
des brevets

# RAPPORT DE RECHERCHE EUROPEENNE

Numéro de la demande

EP 24 18 3594

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CN 104 536 100 A (UNIV HARBIN ENG) 22 avril 2015 (2015-04-22) * alinéas [0021], [0035] * * alinéas [0047], [0049] * * figures 2,3,5 * | 1-10 | INV. G02B6/02 G02B6/293 G02B6/32 G02B6/26 |
| A | CHEN GONGDAI ET AL: "A novel twin-core fiber connector", PROCEEDINGS OF SPIE, IEEE, US, vol. 9655, 1 juillet 2015 (2015-07-01), pages 96551T-96551T, XP060056274, DOI: 10.1117/12.2184010 ISBN: 978-1-62841-730-2 * alinéas [02.2], [Model1] * | 3 | ADD. G02B6/255 G02B6/028 |
| A | WO 2022/004219 A1 (SUMITOMO ELECTRIC IND LTD) 6 janvier 2022 (2022-01-06) * figures 11,12 * & US 2023/228947 A1 (SHIMAKAWA OSAMU [JP] ET AL) 20 juillet 2023 (2023-07-20) * alinéa [0074] * * figures 11,12 * | 6 | |
| | | | DOMAINES TECHNIQUES RECHERCHES (IPC) |
| A | US 2017/235055 A1 (FUJITA TOMOYUKI [JP] ET AL) 17 août 2017 (2017-08-17) * alinéa [0032] * | 1-10 | G02B |
| A | US 2021/223467 A1 (GREGG PATRICK [US] ET AL) 22 juillet 2021 (2021-07-22) * alinéas [0020], [0024] * * alinéas [0041], [0042] * | 1-10 | |

Le présent rapport a été établi pour toutes les revendications

| Lieu de la recherche | Date d'achèvement de la recherche | Examinateur |
|---|---|---|
| La Haye | 24 octobre 2024 | Pantelakis, P |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 24 18 3594

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

24-10-2024

| Document brevet cité au rapport de recherche | Date de publication | Membre(s) de la famille de brevet(s) | Date de publication |
|---|---|---|---|
| CN 104536100 A | 22-04-2015 | AUCUN | |
| WO 2022004219 A1 | 06-01-2022 | CN 115698795 A | 03-02-2023 |
| | | CN 115698796 A | 03-02-2023 |
| | | JP WO2022004219 A1 | 06-01-2022 |
| | | JP WO2022004220 A1 | 06-01-2022 |
| | | US 2023228947 A1 | 20-07-2023 |
| | | US 2023228950 A1 | 20-07-2023 |
| | | WO 2022004219 A1 | 06-01-2022 |
| | | WO 2022004220 A1 | 06-01-2022 |
| US 2017235055 A1 | 17-08-2017 | CN 106605160 A | 26-04-2017 |
| | | EP 3179284 A1 | 14-06-2017 |
| | | JP 5908559 B1 | 26-04-2016 |
| | | JP 2016080914 A | 16-05-2016 |
| | | US 2017235055 A1 | 17-08-2017 |
| | | WO 2016059900 A1 | 21-04-2016 |
| US 2021223467 A1 | 22-07-2021 | CN 113219674 A | 06-08-2021 |
| | | JP 2021128325 A | 02-09-2021 |
| | | US 2021223467 A1 | 22-07-2021 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **ARAO H. et al.** Compact Multi-core Fiber Fan-in/out Using GRIN Lens and Microlens Array. *OECC /ACOFT,* 2014